# EUROPÄISCHE PATENTSCHRIFT

(11) **EP 4 344 819 B1**
(45) Veröffentlichungstag und Bekanntmachung des Hinweises auf die Patenterteilung: **28.08.2024**
(21) Anmeldenummer: 22198997.3
(22) Anmeldetag: 30.09.2022
(51) Int. Cl.: B23Q 1/01

(54) **WERKZEUGMASCHINE SOWIE VERFAHREN ZUR MONTAGE EINER WERKZEUGMASCHINE**
MACHINE TOOL AND METHOD FOR ASSEMBLING A MACHINE TOOL
MACHINE-OUTIL ET PROCÉDÉ DE MONTAGE D'UNE MACHINE-OUTIL

(43) Veröffentlichungstag der Anmeldung: 03.04.2024
(73) Patentinhaber: BES UG (haftungsbeschränkt), 32425 Minden (DE)
(72) Erfinder: BUTZER, Bernd, 32425 Minden (DE)
(74) Vertreter: Dantz, Jan Henning

(56) Entgegenhaltungen:
- EP-A1- 2 100 693
- WO-A1-2009/141708
- DE-A1- 19 745 233

## Beschreibung

Die vorliegende Erfindung betrifft eine Werkzeugmaschine zur Bearbeitung und Handhabung von plattenförmigen Werkstücken mit einem Maschinentisch, der mindestens zwei Längsrahmenmodule und mindestens zwei Querrahmenmodule aufweist, wobei jedes Längsrahmenmodul mit den mindestens zwei Querrahmenmodulen durch Befestigungsmittel verbunden ist, und jedes Längsrahmenmodul einen Obergurt und einen Untergurt aufweist, die über beabstandete Pfosten miteinander verbunden sind, sowie ein Verfahren zur Montage einer Werkzeugmaschine.

Die DE 10 2009 025 816 B4 offenbart eine Vorrichtung zur Bearbeitung von plattenförmigen Werkstücken, bei der eine großformatige Platte aus einem Holzwerkstoff auf einem Maschinentisch abgelegt wird und dann über Werkzeuge bearbeitet wird. Die großformatige Platte kann auch in einzelne Plattenteile aufgeteilt werden, die dann zur weiteren Verarbeitung gefördert werden. Bei solchen Vorrichtungen besteht das Problem, dass der Maschinentisch meist monolithisch aus Stahl-Schweißkonstruktionen hergestellt ist. Dadurch ist es notwendig, das komplette Gestell des Maschinentisches zu einem großvolumigen Rohkörper zusammenzuschweißen, der schlecht zu transportieren ist, was zu einem hohen Montageaufwand sowohl bei der Herstellung als auch am Aufstellungsort führt.

Dieses Problem besteht auch bei Maschinen für die Bearbeitung von Blechen, wie dies beispielsweise in der DE 10 2016 120 151 gezeigt ist. Monolithische Rahmengestelle werden auch bei anderen Maschinen zur Bearbeitung von Stein oder bei Drehmaschinen eingesetzt.

In der DE 197 45 233 A1, die die Basis für den Oberbegriff des Anspruchs 1 bildet, ist eine Werkzeugmaschine mit einer Rahmenkonstruktion offenbart, bei der longitudinale und vertikale rohrförmige Elemente zusammengebaut und dann mit Beton verfüllt und verschlossen werden.

EP 2 100 693 A1 offenbart eine Bearbeitungsvorrichtung mit einem Maschinenbett, das einen Basisabschnitt und winklig dazu vorgesehene Schenkelabschnitt aufweist. Das Maschinenbett kann dabei auch mehrteilig ausgebildet sein, wobei die einzelnen Bauteile miteinander verklebt oder durch Schrauben miteinander verbunden sind.

Es ist daher Aufgabe der vorliegenden Erfindung, eine Werkzeugmaschine zur Bearbeitung und Handhabung von Werkstücken und ein Verfahren zur Montage einer solchen Werkzeugmaschine zu schaffen, die eine flexible Herstellung eines Maschinentisches und eine effektive Installation am Aufstellungsort ermöglichen.

Diese Aufgabe wird mit einer Werkzeugmaschine mit den Merkmalen des Anspruches 1 und einem Verfahren mit den Merkmalen des Anspruches 12 löst.

Bei der erfindungsgemäßen Werkzeugmaschine weist der Maschinentisch mindestens zwei Längsrahmenmodule und mindestens zwei Querrahmenmodule auf, wobei jedes Längsrahmenmodul mit den mindestens zwei Querrahmenmodulen durch Befestigungsmittel verbunden ist und jedes Längsrahmendmodul einen Obergurt und einen Untergurt aufweist, die über beabstandete Pfosten miteinander verbunden sind, wobei an mindestens einem Obergurt eine Führungsschiene zur verfahrbaren Lagerung eines Werkzeuges abgestützt ist. Dadurch können die Querrahmenmodule und die Längsrahmenmodule einzeln in standardisierten Abmessungen und mit höherem Automatisierungsgrad vorgefertigt werden, um dann an den Aufstellungsort der Werkzeugmaschine transportiert zu werden. Diese einzelnen Längsrahmenmodule sind einfacher handhabbar und können am Aufstellungsort aneinander fixiert werden, beispielsweise durch mechanische Befestigungsmittel. Dieser modulare Aufbau führt auch zu einer hohen Flexibilität in der Herstellung der Maschine selbst als auch bei den Anwendungsmöglichkeiten, da die Längsrahmenmodule und Querrahmenmodule in beliebigen Größen herstellbar und miteinander kombinierbar sind.

Bevorzugt sind die mindestens zwei Längsrahmenmodule und die mindestens zwei Querrahmenmodule an Kontaktstellen oberflächenbehandelt. Eine solche Oberflächenbehandlung kann beispielswiese eine Lackierung, insbesondere eine Pulverlackierung, ein Fräsen, Polieren oder ein anderes Bearbeitungsverfahren sein. In jedem Fall werden die Längsrahmenmodule und Querrahmenmodule zuerst oberflächenbehandelt, um dann in einem zweiten Schritt aneinander montiert zu werden, so dass die aneinander anliegenden Kontaktstellen ebenfalls oberflächenbehandelt sind. Die Oberflächenbehandlung erfolgt somit vor dem eigentlichen Zusammenbau der Module.

Für eine stabile Abstützung weist jedes Querrahmenmodul ein unteres Basisprofil und ein oberes horizontales Basisprofil auf, die über mehrere Stützprofile miteinander verbunden sind. Dabei können die Stützprofile vertikal ausgerichtet sein oder geneigt zur Vertikalen, um eine stabile Abstützung zu bewirken. Optional kann für einige Anwendungsfälle auch auf das horizontale obere Basisprofil verzichtet werden, so dass das Querrahmenmodul nur ein unteres Basisprofil und vertikale oder geneigte Stützprofile aufweist.

Die Werkzeugmaschine wird bevorzugt mit einem verfahrbaren Portal ausgerüstet. Dabei kann das Portal bevorzugt an zwei Pfosten abgestützt sein, die jeweils entlang einer Führungsschiene verfahrbar sind. An dem Portal können dann Werkzeuge, beispielsweise zur Holzbearbeitung, zum Bohren, Schneiden oder anderweitigen mechanischen Bearbeitung von Werkstücken, als auch Werkzeuge zur additiven Fertigung vorgesehen sein. Zusätzlich oder alternativ können auch Greifwerkzeuge vorhanden sein, um die Werkstücke anheben und ablegen zu können.

Für eine exakte Ausrichtung der Führungsschiene auf dem Obergurt sind vorzugsweise zwischen dem Obergurt und der Führungsschiene Montageplatten vorgesehen, die auf dem Obergurt fixiert sind. Durch Montageplatten zwischen dem Obergurt und der Führungsschiene kann ein Höhenausgleich durch eine unterschiedliche Anzahl oder unterschiedliche Dicken der Montageplatten realisiert werden, damit die Führungsschiene exakt und plan in linearer Richtung auf dem Obergurt abgestützt ist. Kleinere Unebenheiten zwischen Streben des Obergurtes können dadurch auf einfache Weise ausgeglichen werden. Die Montageplatten sind bevorzugt als Druckgussplatten aus Aluminium oder Kunststoff vorgesehen, die mit Angussstellen versehen sind, um die Platten schnell auf dem Obergurt zu platzieren und mit Verbindungsmittel zu fixieren. Die Platten können auch in gleicher Dicke an dem Obergurt montiert werden und dann mit einer Fräs-Vorrichtung am Aufstellort zu planen, also in der Dicke zu reduzieren. Das Planen der Platten garantiert eine sehr hohe Präzision, so dass die Führungsschiene exakt auf die durch Fräsen plan ausgerichteten Platten montiert werden kann.

Für eine effektive Montage des Maschinentisches können die mindestens zwei Querrahmenmodule mit den Längsrahmenmodulen verschraubt sein. Dabei können die Schrauben die Längsrahmenmodule zu den Querrahmenmodulen hin vorspannen, also in Längsrichtung der Querrahmenmodule verspannen, so dass eine exakte Ausrichtung und Abstützung der Längsrahmenmodule erhalten wird.

In einer weiteren Ausgestaltung ist auf einer Fußplatte ein Abschnitt eines Querrahmenmoduls und ein Abschnitt eines Längsrahmenmoduls abgestützt. Dadurch können an den Knotenpunkten zwischen Längsrahmenmodul und Querrahmenmodul die Fußplatten vorgesehen werden, so dass Unebenheiten auf einem Untergrund leicht ausgeglichen werden können.

In einer bevorzugten Ausführungsform stehen zumindest an einer Seite die Längsrahmenmodule mit der Führungsschiene über die Querrahmenmodule endseitig hervor. Dieser hervorstehende Abschnitt der Längsrahmenmodule mit der Führungsschiene kann genutzt werden, um Werkstücke von einem Bereich des Maschinentisches zu einer benachbarten Position zu transportieren, beispielsweise einem Ablagestapel, einem Förderband oder einer anderen Bearbeitungsstation. In dem hervorstehenden Bereich der Führungsschiene wird somit eine Schnittstelle gebildet, damit die Werkstücke automatisch einer weiteren Bearbeitung zugeführt werden können.

Vorzugsweise weist der Maschinentisch eine ebene Auflage für plattenförmige Werkstücke auf, beispielswiese für Holzwerkstoffplatten, Stahlbleche, Aluminiumplatten, Kunststoffplatten oder andere Werkstücke. Ein solcher Maschinentisch kann beispielsweise mit Saugeinrichtungen vorgesehen sein, um über einen Unterdruck das Werkstück ganz oder teilweise zu fixieren. Alternativ kann der Maschinentisch auch für andere Bearbeitungsverfahren ausgelegt sein, beispielsweise mit einer Opferplatte, einem Bearbeitungsverfahren mit einem Schneidstrahl, einem Wasserstrahlverfahren, einem Laser-Brennstrahl. Hierfür kann optional unter dem Maschinentisch eine Wanne vorgesehen sein, beispielsweise eine verfahrbare Auffangwanne. Die erfindungsgemäße Werkzeugmaschine kann somit für zahlreiche Bearbeitungsformen eingesetzt werden.

Bei einem erfindungsgemäßen Verfahren zur Montage einer Werkzeugmaschine werden zunächst mindestens zwei Längsrahmenmodule montiert, die jeweils einen Obergurt und einen Untergurt aufweisen, die über beabstandete Pfosten miteinander verbunden sind. Ferner werden mindestens zwei Querrahmenmodule montiert, die jeweils ein unteres Basisprofil und eines oder mehrere Stützprofile umfassen, die insbesondere vertikal oder geneigt zur Vertikalen ausgerichtet sind. Die Längsrahmenmodule und die Querrahmenmodule werden danach oberflächenbehandelt, insbesondere beschichtet, beispielsweise mit einem Lack, um dann danach die Längsrahmenmodule jeweils mit mindestens zwei Querrahmenmodulen über mechanische Befestigungsmittel zur Ausbildung eines Gestells eines Maschinentisches für die Werkzeugmaschine zu verbinden. Durch diese modulbauweise können die einzelnen Längsrahmenmodule und Querrahmenmodule effektiv zum Aufstellungsort der Maschine transportiert werden, um diese dann über die mechanischen Befestigungsmittel aneinander zu fixieren. Dies verkürzt die Aufstellungszeit bei der Maschinenmontage erheblich.

Vorzugsweise werden die Längsrahmenmodule und Querrahmenmodule bei der Oberflächenbehandlung beschichtet, insbesondere pulverbeschichtet.

Für eine flexible Bearbeitung von Werkstücken wird bevorzugt an jedem Obergurt der Längsrahmenmodule jeweils eine Führungsschiene zur verfahrbaren Lagerung der Werkzeuge, insbesondere eines Portals, festgelegt.

Die Erfindung wird nachfolgend anhand mehrerer Ausführungsbeispiele mit Bezug auf die beigefügten Zeichnungen näher erläutert. Es zeigen:
- Figur 1: eine perspektivische Ansicht einer erfindungsgemäßen Werkzeugmaschine;
- Figur 2: eine Seitenansicht auf ein Längsrahmenmodul;
- Figur 3: eine Seitenansicht auf ein Querrahmenmodul;
- Figur 4: eine Draufsicht auf eine Werkzeugmaschine;
- Figur 5: eine Ansicht auf ein modifiziertes Querrahmenmodul, und
- Figur 6: eine Ansicht auf ein modifiziertes Querrahmenmodul an einem modifizierten Maschinentisch.

Eine Werkzeugmaschine 1 umfasst zwei oder mehr Längsrahmenmodule 2 und zwei oder mehr Querrahmenmodule 3. Die Querrahmenmodule 3 sind zwischen den Längsrahmenmodulen 2 angeordnet und über mechanische Befestigungsmittel, an diesen fixiert. Die Gestellhöhe der Längsrahmenmodule 2 und Querrahmenmodule 3 ist gleich hoch, und diese bilden somit in einer Draufsicht von oben einen umlaufenden Gestellrahmen, der in der montierten Position Teil eines Maschinentisches 6 bildet.

An jedem Längsrahmenmodule 2 ist eine Führungsschiene 7 abgestützt, wobei an jeder Führungsschiene 7 ein Portalpfosten 5 eines Portals 4 verfahrbar gehalten ist. Das Portal 4 übergreift dadurch einen Maschinentisch 6, auf dem Werkstück zur Bearbeitung abgelegt werden können. Als Werkstücke können beispielsweise großformatige Platten aus Holzwerkstoffen, Kunststoff oder Metall vorgesehen sein, die über Werkzeuge bearbeitet werden, die an dem Portal 4 gehalten sind.

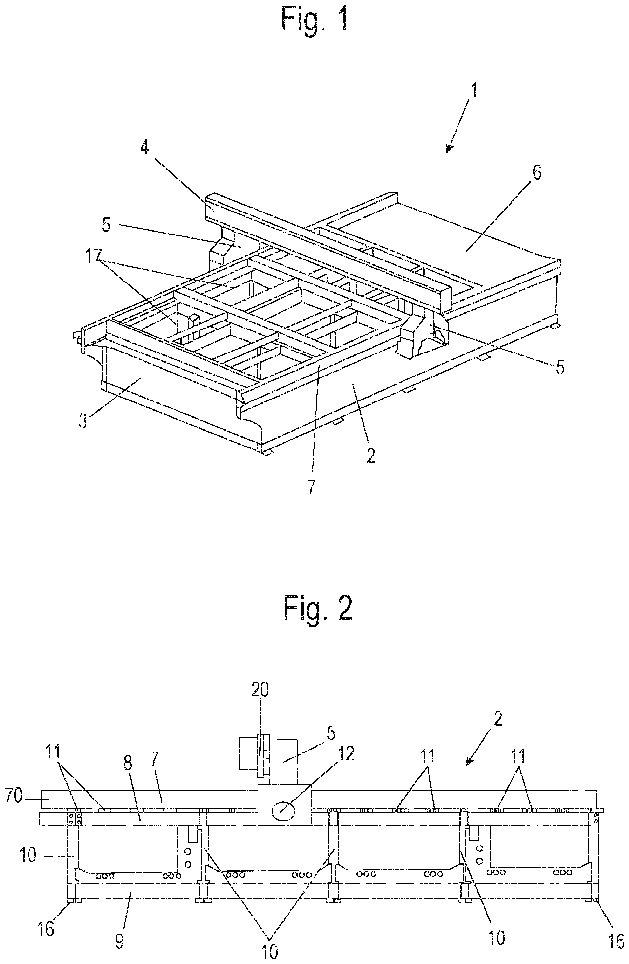

In Figur 2 ist ein Längsrahmenmodul 2 gezeigt. Das Längsrahmenmodul 2 umfasst einen Obergurt 8 und einen Untergurt 9, die aus metallischen Profilen, beispielsweise Rohren, gebildet sind, wobei der Obergurt 8 über mehrere Pfosten 10 auf dem Untergurt 9 abgestützt ist. Je nach Länge des Längsrahmenmoduls kann die Anzahl der Pfosten 10 gewählt werden, die beispielsweise in regelmäßigen Abständen zwischen 80 cm bis 1,50 m angeordnet sind. Die Pfosten 10 sind mit dem Obergurt 8 und dem Untergurt 9 verschweißt.

Das Längsrahmenmodul 2 ist im Bereich des Untergurtes 9 auf mehreren Fußplatten 16 abgestützt. Bevorzugt sind die Fußplatten 16 so ausgebildet, dass ein Abschnitt eines Untergurtes 9 und ein stirnseitiger Abschnitt eines Querrahmenmoduls 3 auf der Fußplatte 16 abgestützt ist. In der Fußplatte 16 kann optional eine Schraube oder anderes Ausgleichselement zum Nivellieren der Maschine angebracht werden, um Unebenheiten im Boden auszugleichen.

An der Oberseite des Obergurtes 8 sind mehrere Montageplatten 11 vorgesehen, die zwischen dem Obergurt 8 und der Führungsschiene 7 angeordnet sind. Wenn einzelne Abschnitte des Obergurtes 8 nicht exakt auf derselben Höhe angeordnet sind, kann dies durch die Montageplatten 11 nivelliert werden, die in unterschiedlicher Dicke montiert oder in gleicher Dicke montiert und dann durch Bearbeitung in der Dicke reduziert werden können. Die Montageplatten 11 können in standardisierter Form als Gussteil hergestellt sein. Dann können diese über Bohrungen auf dem Obergurt 8 festgelegt und verschraubt werden. Im Anschluss daran ist die Planheit der Montageplatten 11 über die Länge des Rahmens mittels einer Fräsvorrichtung auch präzise herstellbar.

Dadurch kann die Führungsschiene 7 in horizontale Richtung exakt ausgerichtet sein und auf den Montageplatten 11 aufliegen. Bevorzugt ist die Führungsschiene 7 über mechanische Befestigungsmittel an den Montageplatten 11 und dem Obergurt 8 fixiert.

An der Führungsschiene 7 ist der Pfosten 5 des Portals 4 verfahrbar, wobei an mindestens einem Pfosten 5, bevorzugt an beiden Pfosten 5, ein Motor 12 vorgesehen ist, mittels dem das Portal 4 in Längsrichtung der Führungsschiene 7 verfahrbar ist.

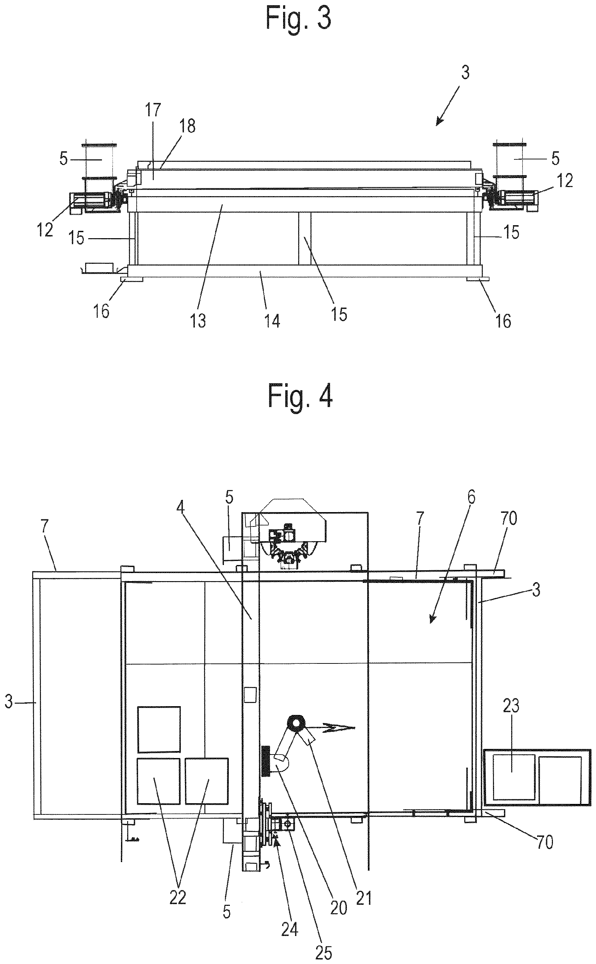

In Figur 3 ist ein Querrahmenmodul 3 gezeigt, das ein unteres Basisprofil 14 und ein oberes Basisprofil 13 aufweist, die beispielsweise aus Rohrprofilen aus Stahl gebildet sind. Das obere Basisprofil 13 ist über mehrere vertikale Pfosten 15 abgestützt, die das untere Basisprofil 14 mit dem oberen Basisprofil 13 verbinden. Das Querrahmenmodul 3 besitzt dabei dieselbe Gestellhöhe wie die Längsrahmenmodule 2, und in der montierten Position kann das Querrahmenmodul 3 mit den Längsrahmenmodulen 2 verschraubt sein, beispielsweise über Schrauben, die parallel zur Längsrichtung der Basisprofile 13 und 14 ausgerichtet sind.

Oberhalb des oberen Basisprofils 13 ist mindestens ein Tischrahmen 17 angeordnet, der eine Vakuumspannplatte 18 umfasst. Dadurch können Werkstücke auf der Oberseite der Vakuumspannplatte 18 durch Unterdruck fixiert werden. Dies eignet sich besonders für Holzwerkstoffplatten, die aus großformatigen Platten in Einzelplatten aufgeteilt und bearbeitet werden. Es können auch mehrere Tischrahmen 17 auf dem Basisprofil 13 montiert werden. Die Breite eines Tischrahmens 17 ist bevorzugt gleich dem Abstand der vertikal angeordneten Pfosten 10 an dem Längsrahmenmodul 2 und in der Länge gleich der Breite des Maschinentisch 6 oder der Platte. Die Tischrahmen 17 tragen in dem Fall der Figur 3 Kräfte an der Führungsschiene 7 ab.

In Figur 4 ist eine Draufsicht auf einen Maschinentisch gezeigt, über dem das Portal 4 verfahrbar ist. An dem Portal 4 ist an einem verfahrbaren Schlitten 20 ein Roboter 21 zur Handhabung und/oder zur Bearbeitung von Werkstücken 22 fixiert. Die Werkstücke 22, die beispielsweise aus aufgeteilten Platten hergestellt sind, können über den Roboter 21 zu einem Ablagestapel 23 befördert werden. Der Ablagestapel 23 ist dabei benachbart zu einem Querrahmenmodul 3 angeordnet, wobei die Führungsschiene 7 mit Abschnitten 70 über das endseitige Querrahmenmodul 3 hervorsteht, so dass das Portal 4 über das Querrahmenmodul 3 hinaus bewegt werden kann und an dem Ablagestapel 23 die Werkstücke stapelt oder zu einem anderen Bearbeitungswerkzeug übergibt. Für eine verbesserte Abstützung der Führungsschiene 7 kann auch der Obergurt 8 des Längsrahmenmoduls 2 über das Querrahmenmodul 3 hervorstehen, optional auch an beiden Enden in Längsrichtung, also sowohl vorne als auch hinten an dem Maschinentisch.

Statt dem Roboter 21 oder zusätzlich können auch anderer Werkzeuge an dem Portal 4 auf einem Schlitten eingesetzt werden, beispielsweise Bohrer, Fräsen, Schneidwerkzeuge oder Umformwerkzeuge.

Anstatt durch den Roboter 21 kann die Werkstückhandhabung für die Abstapelung der Werkstücke 22 über eine Hubvorrichtung 24 erfolgen, die am Portal 4 mitfahrend an einem Werkzeugschlitten angebracht ist. Die Hubvorrichtung umfasst dabei mindestens einen vertikalen und/ oder horizontalen Hub zur Handhabung der Werkstücke 22. Eine solche Hubvorrichtung eignet sich besonders für ein Verfahren zur Handhabung von einzelnen aus einer großformatigen Platte herausgetrennten und zuvor bearbeiteten Werkstücke.

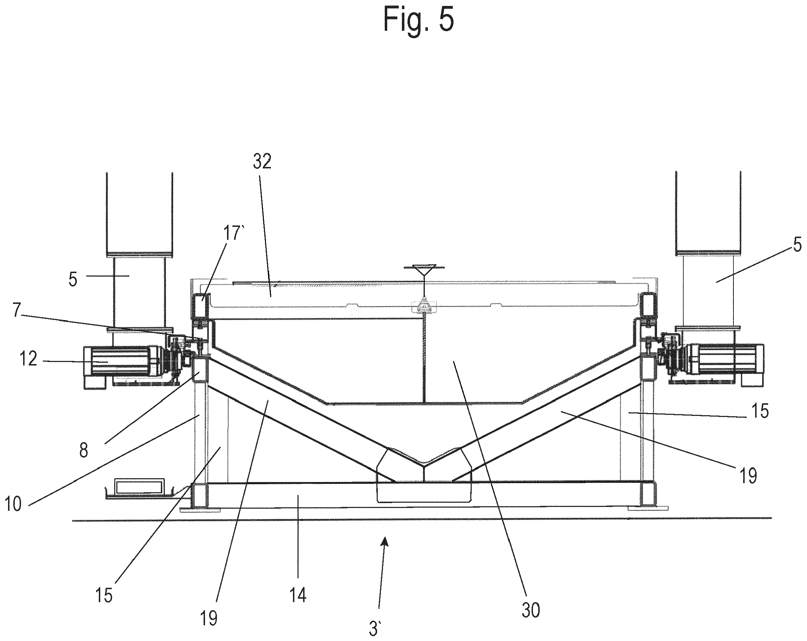

In Figur 5 ist ein modifiziertes Querrahmenmodul 3' gezeigt, bei dem kein oberes Basisprofil 13 vorgesehen ist, sondern nur ein unteres Basisprofil 14 und seitliche Pfosten 15. Von einem mittleren Bereich des unteren Basisprofils 14 erstrecken sich zwei geneigte Stützprofile 19 zu einem oberen Bereich der Pfosten 15, so dass das Querrahmenmodul 3' im Bereich benachbart zu den Längsrahmenmodulen 2 im Wesentlichen die gleiche Gestellhöhe besitzt. Durch diese V-förmige Anordnung der Stützprofil 19 ist ein mittlerer Bereich des Maschinentisches 6 für andere Zwecke einsetzbar, beispielsweise für eine verfahrbare Auffangwanne 30, die unterhalb eines offenen Leistentisches für die Strahlbearbeitung, beispielsweise für Schneidverfahren, vorgesehen ist.

Die Auffangwanne 30 kann dabei stationär abgestützt gehalten sein oder optional mit links/rechts angeordneten verfahrenden Schlitten 31 verbunden und verfahren werden. Die mechanische Verbindung zwischen der Auffangwanne 30 und den Portalpfosten 5 verfährt dabei in dem vorhandenen Spalt zwischen der Führungsschiene 7 und dem längs des vorhanden Längsrahmenmoduls 2 verlaufenden Tischrahmen 17, der sich auf den beiden Enden der Führungsschiene 7 abstützt. Über dem Leistentisch 32 ist das Portal 4 wie bei den vorangegangenen Ausführungsbeispielen über die Portalpfosten 5 verfahrbar.

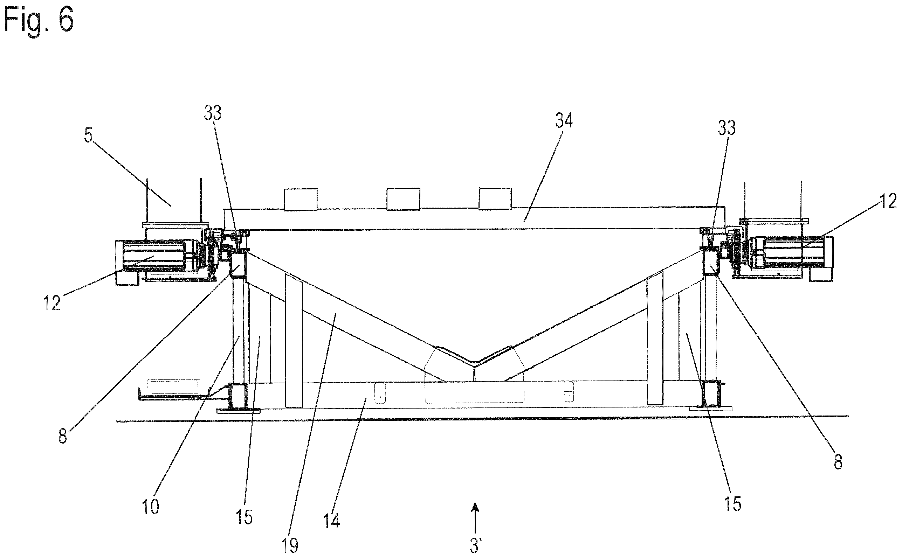

Figur 6 zeigt ein zur Figur 5 identischen Querrahmenmodul 3' jedoch mit einer weiteren Tischvariante. Über Profilschienen 33 kann eine komplette Tischkonsole 34 verfahren werden, die oberhalb oder zwischen den Führungsschiene 7 angeordnet ist.

Die dargestellten Ausführungsbeispiele können miteinander kombiniert werden, beispielsweise kann das Querrahmenmodul 3' auch bei einer Werkzeugmaschine 1 nach Figur 1 oder 2 eingesetzt werden. Zudem kann die Werkzeugmaschine 1 für völlig unterschiedliche Anwendungsfälle eingesetzt werden, je nachdem, welche Werkstücke auf dem Maschinentisch 6 bearbeitet werden sollen.

Die Längsrahmenmodule und die Querrahmenmodule werden zu vorgefertigten Einheiten montiert, wobei die Profilrohre miteinander verschweißt oder über mechanische Befestigungsmittel miteinander verbunden werden. Nach der Herstellung der Längsrahmenmodule 2 und der Querrahmenmodule 3, 3' werden diese oberflächenbearbeitet, insbesondere beschichtet, so dass dann die Längsrahmenmodule 2 und Querrahmenmodule 3 zum Aufstellungsort der Werkzeugmaschine 1 transportiert werden können. Dort werden dann die Querrahmenmodule 3 an den Längsrahmenmodulen 2 fixiert, um eine Werkzeugmaschine 1 herzustellen. Dabei können auch mehr als zwei Längsrahmenmodule 2 und/oder Querrahmenmodule 3 zu einem Maschinentisch 6 miteinander verbunden werden.

### Bezugszeichenliste

- 1: Werkzeugmaschine
- 2: Längsrahmenmodul
- 3, 3': Querrahmenmodul
- 4: Portal
- 5: Portalpfosten
- 6: Maschinentisch
- 7: Führungsschiene
- 8: Obergurt
- 9: Untergurt
- 10: Pfosten
- 11: Montageplatte
- 12: Motor
- 13: Basisprofil
- 14: Basisprofil
- 15: Pfosten
- 16: Fußplatte
- 17,17`: Tischrahmen
- 18: Vakuumspannplatte
- 19: Stützprofil
- 20: Schlitten
- 21: Roboter
- 22: Werkstück
- 23: Ablagestapel
- 24: Hubvorrichtung
- 25: Werkzeug
- 30: Auffangwanne
- 32: Leistentisch
- 33: Profilschiene
- 34: Tischkonsole
- 70: Abschnitte

## Patentansprüche

1. Werkzeugmaschine (1) zur Bearbeitung und Handhabung von plattenförmigen Werkstücken (22) mit einem Maschinentisch (6), der mindestens zwei Längsrahmenmodule (2) und mindestens zwei Querrahmenmodule (3) aufweist, wobei jedes Längsrahmenmodul (2) mit den mindestens zwei Querrahmenmodulen (3) durch Befestigungsmittel verbunden ist, und jedes Längsrahmenmodul (2) einen Obergurt (8) und einen Untergurt (9) aufweist, die aus metallischen Profilen, beispielsweise Rohren, gebildet sind und die über beabstandete Pfosten (10) miteinander verbunden sind, wobei an mindestens einem Obergurt (8) eine Führungsschiene (7) zur verfahrbaren Lagerung eines Werkzeuges abgestützt ist, **dadurch gekennzeichnet, dass** an jedem Längsrahmenmodul (2) die Pfosten (10) mit dem Obergurt (8) und dem Untergurt (9) verschweißt sind und jedes Längsrahmenmodul (2) jeweils mit mindestens zwei Querrahmenmodulen (3) über mechanische Befestigungsmittel zur Ausbildung eines Gestells des Maschinentisches (6) der Werkzeugmaschine (1) verbunden ist.

2. Werkzeugmaschine nach Anspruch 1, **dadurch gekennzeichnet, dass** die mindestens zwei Längsrahmenmodule (2) und die mindestens zwei Querrahmenmodule (3) an den Kontaktstellen oberflächenbehandelt sind.

3. Werkzeugmaschine nach Anspruch 1 oder 2, **dadurch gekennzeichnet, dass** jedes Querrahmenmodul (3) ein unteres Basisprofil (14) und ein oberes horizontales Basisprofil (13) aufweist, die über ein oder mehrere Stützprofile miteinander verbunden sind.

4. Werkzeugmaschine nach einem der vorhergehenden Ansprüche, **dadurch gekennzeichnet, dass** an zwei beabstandet montierten Führungsschienen (7) ein verfahrbares Portal (4) gehalten ist.

5. Werkzeugmaschine nach Anspruch 4, **dadurch gekennzeichnet, dass** an dem verfahrbaren Portal (4) ein Gelenk-Roboter (21) und/oder das Werkzeug (25) gehalten ist.

6. Werkzeugmaschine nach Anspruch 4 oder 5, **dadurch gekennzeichnet, dass** an dem verfahrbare Portal (4) eine Hubvorrichtung (24) zur Handhabung der bearbeiteten Werkstücke (22) gehalten ist.

7. Werkzeugmaschine nach einem der vorhergehenden Ansprüche, **dadurch gekennzeichnet, dass** auf dem Obergurt (8) mehrere Montageplatten (11) zur Abstützung der Führungsschiene (7) fixiert sind.

8. Werkzeugmaschine nach einem der vorhergehenden Ansprüche, **dadurch gekennzeichnet, dass** die mindestens zwei Querrahmenmodule (3) mit den Längsrahmenmodulen (2) verschraubt sind.

9. Werkzeugmaschine nach einem der vorhergehenden Ansprüche, **dadurch gekennzeichnet, dass** auf einer Fußplatte (16) ein Abschnitt eines Querrahmenmoduls (3) und ein Abschnitt eines Längsrahmenmoduls (2) abgestützt sind.

10. Werkzeugmaschine nach einem der vorhergehenden Ansprüche, **dadurch gekennzeichnet, dass** zumindest an einer Seite die Längsrahmenmodule (2) mit der Führungsschiene (7) über das Querrahmenmodul (3) endseitig hervorstehen.

11. Werkzeugmaschine nach einem der vorhergehenden Ansprüche, **dadurch gekennzeichnet, dass** der Maschinentisch (6) eine ebene Auflage für plattenförmige Werkstücke (22) ausbildet.

12. Verfahren zur Montage einer Werkzeugmaschine (1), mit den folgenden Schritten:
- Montage von mindestens zwei Längsrahmenmodulen (2), die jeweils einen Obergurt (8) und einen Untergurt (9) aufweisen, die über beabstandete Pfosten (10) miteinander verbunden sind, wobei die Pfosten (10) mit dem Obergurt (8) und dem Untergurt (9) verschweißt werden;
- Montage von mindestens zwei Querrahmenmodulen (3), die jeweils ein unteres Basisprofil (14) und mindestens ein vertikales oder geneigt zum Basisprofil (14) ausgerichtetes Stützprofil (15, 19) aufweisen,
- Oberflächenbehandeln der einzelnen Längsrahmenmodule (2) und der Querrahmenmodule (3), und
- Verbinden der Längsrahmenmodule (2) jeweils mit mindestens zwei Querrahmenmodulen (3) über mechanische Befestigungsmittel zur Ausbildung eines Gestells eines Maschinentisches (6) für die Werkzeugmaschine (1).

13. Verfahren nach Anspruch 12, **dadurch gekennzeichnet, dass** bei dem Oberflächenbehandeln die Längsrahmenmodule (2) und die Querrahmenmodule (3) beschichtet werden.

14. Verfahren nach Anspruch 12 oder 13, **dadurch gekennzeichnet, dass** an jedem Obergurt (8) des Längsrahmenmoduls (2) eine Führungsschiene (7) zur verfahrbaren Lagerung eines Werkzeuges und/oder eines Tischs festgelegt wird.

15. Verfahren nach einem der Ansprüche 12 bis 14, **dadurch gekennzeichnet, dass** an dem Gestell des Maschinentischens an den Obergurten (8) der Längsrahmenmodule (2) Führungsschienen (7) mit einem verfahrbaren Portal (4) mit einer Hubvorrichtung zur Handhabung der Werkstücke (22) montiert werden.

## Claims

1. Machine tool (1) for the processing and handling of plate-shaped workpieces (22) with a machine table (6) comprising at least two longitudinal frame modules (2) and at least two cross frame modules (3), wherein each longitudinal frame module (2) is connected to the at least two cross frame modules (3) by fastening means and each longitudinal frame module (2) comprises an upper flange (8) and a lower flange (9), which are formed from metallic profiles, for example pipes, and which are connected to one another via spaced posts (10), wherein a guide rail (7) for the movable mounting of a tool is supported on at least one upper flange (8), **characterised in that** on each longitudinal frame module (2) the posts (10) are welded to the upper flange (8) and the lower flange (9) and each longitudinal frame module (2) is connected to at least two cross frame modules (3) via mechanical fastening means for forming a rack of the machine table (6) of the machine tool (1).

2. Machine tool according to claim 1, **characterised in that** the at least two longitudinal frame modules (2) and the at least two cross frame modules (3) are surface-treated at the contact points.

3. Machine tool according to claim 1 or 2, **characterised in that** each cross frame module (3) comprises a lower base profile (14) and an upper horizontal base profile (13), which are connected to one another via one or more supporting profiles.

4. Machine tool according to one of the preceding claims, **characterised in that** a movable portal (4) is held on two guide rails (7) mounted at a distance from one another.

5. Machine tool according to claim 4, **characterised in that** an articulated robot (21) and/or the tool (25) is held on the movable portal (4).

6. Machine tool according to claim 4 or 5, **characterised in that** a lifting device (24) for handling the processed workpieces (22) is held on the movable portal (4).

7. Machine tool according to one of the preceding claims, **characterised in that** a plurality of mounting plates (11) for supporting the guide rail (7) are fixed on the upper flange (8).

8. Machine tool according to one of the preceding claims, **characterised in that** the at least two cross frame modules (3) are screwed to the longitudinal frame modules (2).

9. Machine tool according to one of the preceding claims, **characterised in that** a section of a cross frame module (3) and a section of a longitudinal frame module (2) are supported on a base plate (16).

10. Machine tool according to one of the preceding claims, **characterised in that** at least on one side the longitudinal frame module (2) with the guide rail (7) and the upper flange (8) protrude beyond the end of the cross frame module (3).

11. Machine tool according to one of the preceding claims, **characterised in that** the machine table (6) forms a flat support for plate-shaped workpieces (22).

12. Method for assembling a machine tool (1), comprising the following steps:
- Assembling of at least two longitudinal frame modules (2), each comprising an upper flange (8) and a lower flange (9), which are connected to each other via spaced posts (10), wherein the posts (10) are welded to the upper flange (8) and the lower flange (9);
- Assembling of at least two cross frame modules (3, 3'), each comprising a lower base profile (14) and at least one supporting profile (15, 19) orientated vertically or inclined to the base profile (14),
- Surface treating the individual longitudinal frame modules (2) and the cross frame modules (3, 3'), and
- Connection of the longitudinal frame modules (2) in each case to at least two cross frame modules (3, 3') via mechanical fastening means for forming a rack of a machine table (6) for the machine tool (1).

13. Method according to claim 12, **characterised in that** the longitudinal frame modules (2) and the cross frame modules (3) are coated during the surface treatment.

14. Method according to claim 12 or 13, **characterised in that** a guide rail (7) for the movable mounting of a tool and/or a table is fixed to each upper flange (8) of the longitudinal frame module (2).

15. Method according to one of claims 12 to 14, **characterised in that** guide rails (7) with a movable portal (4) with a lifting device for handling the workpieces (22) are mounted on the rack of the machine table on the upper flanges (8) of the longitudinal frame modules (2).

## Revendications

1. Machine-outil (1) pour l'usinage et la manipulation de pièces en forme de plaque (22), avec une table de machine (6) comportant au moins deux modules de cadre longitudinaux (2) et au moins deux modules de cadre transversaux (3), chaque modules de cadre longitudinal (2) étant assemblé avec les au moins deux modules de cadre transversaux (3) par des moyens de fixation et chaque module de cadre longitudinal (2) comportant une membrure supérieure (8) et une membrure inférieure (9) formées de profilés métalliques, par exemple de tuyaux, et assemblées les uns aux autres par l'intermédiaire de poteaux (10) écartés, un rail de guidage (7) étant appuyé sur au moins une membrure supérieure (8) pour le soutien mobile d'un outil, **caractérisée en ce que**, sur chaque module de cadre longitudinal (2), les poteaux (10) sont soudés avec la membrure supérieure (8) et la membrure inférieure (9) et chaque module de cadre longitudinal (2) est assemblé avec au moins deux modules de cadre transversaux (3) par l'intermédiaire de moyens de fixation mécaniques pour former un bâti de la table de machine (6) de la machine-outil (1).

2. Machine-outil selon la revendication 1, **caractérisée en ce que** les au moins deux modules de cadre longitudinaux (2) et les au moins deux modules de cadre transversaux (3) ont un traitement de surface aux points de contact.

3. Machine-outil selon la revendication 1 ou 2, **caractérisée en ce que** chaque module de cadre transversal (3) comporte un profilé de base inférieur (14) et un profilé de base supérieur (13) qui sont reliés l'un à l'autre par un ou plusieurs profilés d'appui.

4. Machine-outil selon l'une des revendications précédentes, **caractérisée en ce qu'**un portique mobile (4) est retenu sur deux rails de guidage (7) montés à distance l'un de l'autre.

5. Machine-outil selon la revendication 4, **caractérisée en ce qu'**un robot d'articulation (21) et/ou l'outil (25) sont retenus sur le portique mobile (4).

6. Machine-outil selon la revendication 4 ou 5, **caractérisée en ce qu'**un dispositif de levage (24) est retenu sur le portique mobile (4) pour la manipulation des pièces (22) usinées.

7. Machine-outil selon l'une des revendications précédentes, **caractérisée en ce que** plusieurs plaques de montage (11) sont fixées sur la membrure supérieure (8) pour supporter le rail de guidage (7).

8. Machine-outil selon l'une des revendications précédentes, **caractérisée en ce que** les au moins deux modules de cadre transversaux (3) sont vissés avec les modules de cadre longitudinaux (2).

9. Machine-outil selon l'une des revendications précédentes, **caractérisée en ce qu'**une partie d'un module de cadre transversal (3) et une partie d'un module de cadre longitudinal (2) s'appuient sur une plaque de socle (16).

10. Machine-outil selon l'une des revendications précédentes, **caractérisée en ce que** les modules de cadre longitudinaux (2) dépassent au moins d'un côté à l'extrémité munie du rail de guidage (7) au-delà du module de cadre transversal (3).

11. Machine-outil selon l'une des revendications précédentes, **caractérisée en ce que** la table de machine (6) forme un appui plan pour les pièces en forme de plaque (22).

12. Procédé pour le montage d'une machine-outil (1), comprenant les étapes suivantes :
- montage d'au moins deux modules de cadre longitudinaux (2), qui comportent chacun une membrure supérieure (8) et une membrure inférieure (9) et qui sont assemblés entre eux par l'intermédiaire de poteaux (10) écartés, lesquels poteaux (10) sont soudés à la membrure supérieure (8) et à la membrure inférieure (9) ;
- montage d'au moins deux modules de cadre transversaux (3), qui comportent chacun un profilé de base inférieur (14) et au moins un profilé d'appui (15, 19) vertical ou incliné par rapport au profilé de base (14) ;
- traitement de surface des différents modules de cadre longitudinaux (2) et des modules de cadre transversaux (3) et
- assemblage de chacun des modules de cadre longitudinaux (2) avec au moins deux modules de cadre transversaux (3) à l'aide de moyens de fixation mécaniques pour former un bâti d'une table de machine (6) pour la machine-outil (1).

13. Procédé selon la revendication 12, **caractérisé en ce que** les modules de cadre longitudinaux (2) et les modules de cadre transversaux (3) sont revêtus pendant le traitement de surface.

14. Procédé selon la revendication 12 ou 13, **caractérisé en ce qu'**un rail de guidage (7) est fixé sur chaque membrure supérieure (8) du module de cadre longitudinal (2) pour l'appui mobile d'un outil et/ou d'une table.

15. Procédé selon l'une des revendications 12 à 14, **caractérisé en ce que** des rails de guidage (7) sont montés sur le bâti de la table de machine sur les membrures supérieures (8) des modules de cadre longitudinaux (2), avec un portique mobile (4) muni d'un dispositif de levage pour la manipulation des pièces (22).
